# EUROPEAN PATENT SPECIFICATION

(11) **EP 1 854 384 B1**
(45) Date of publication and mention of the grant of the patent: **09.12.2009**
(21) Application number: 07107924.8
(22) Date of filing: 10.05.2007
(51) Int. Cl.: A47J 31/40

(54) **Machine for preparing beverages by infusion of a product contained in a capsule or the like**
Maschine zum Zubereiten von Getränken durch Aufgießen eines in einer Kapsel oder dergleichen enthaltenen Produkts
Machine de préparation de boissons par l'infusion d'un produit contenu dans une capsule ou similaire

(30) Priority: 12.05.2006 IT TO20060346
(43) Date of publication of application: 14.11.2007
(73) Proprietor: Luigi Lavazza S.p.A., 10154 Torino (IT)
(72) Inventor: Faccinti, Alfredo, I-10070, SAN FRANCESCO AL CAMPO (Torino) (IT)
(74) Representative: Quinterno, Giuseppe

(56) References cited:
- EP-A1- 1 208 782
- WO-A-2005/115206

## Description

The present invention relates to a machine for preparing beverages by infusion of a product contained in a capsule, of the kind defined in the preamble of claim 1.

In this description and in the appended claims, the term "capsule" means, in general, a package which contains a portion of a product, for example, ground coffee, and which enables a beverage to be prepared by infusion or percolation. In this sense, the term "capsule" therefore also means, for example, a so-called paper filter or the like.

WO 2005/115206A1 discloses a machine of this kind wherein the capsule-holder body is translatable in a horizontal plane and the actuator member comprises a lever or handle which is rotatable about a first horizontal axis which is parallel to said plane. The actuator lever or handle is coupled to the capsule-holder body through a crank-link rod mechanism such that the capsule-holder is pivotable about a second axis parallel to said first axis.

EP 1208782A1 discloses a similar machine in which the actuator member comprises a handle which is rotatable about a horizontal axis parallel to the translation plane of the capsule-holder body, between a rest position and a service position in which said handle extends behind and on the front of the machine, respectively.

An object of the present invention is to provide an improved machine which is greatly simplified mechanically and is very simple and reliable in operation.

This and other objects are achieved according to the invention by a machine according to claim 1.

Further characteristics and advantages of the invention will become clear from the following detailed description which is given purely by way of non-limiting example with reference to the appended drawings, in which:
Figures 1 to 4 are perspective views of a machine according to the invention, shown in four different operative conditions,
Figures 1a to 4a show, schematically and in side view, the machine according to the invention in the four operative positions to which Figures 1 to 4 relate, and
Figure 5 is a side view of a machine according to the invention in a version with motorized actuation.

A beverage-preparation machine according to the present invention is generally indicated 1 in the drawings.

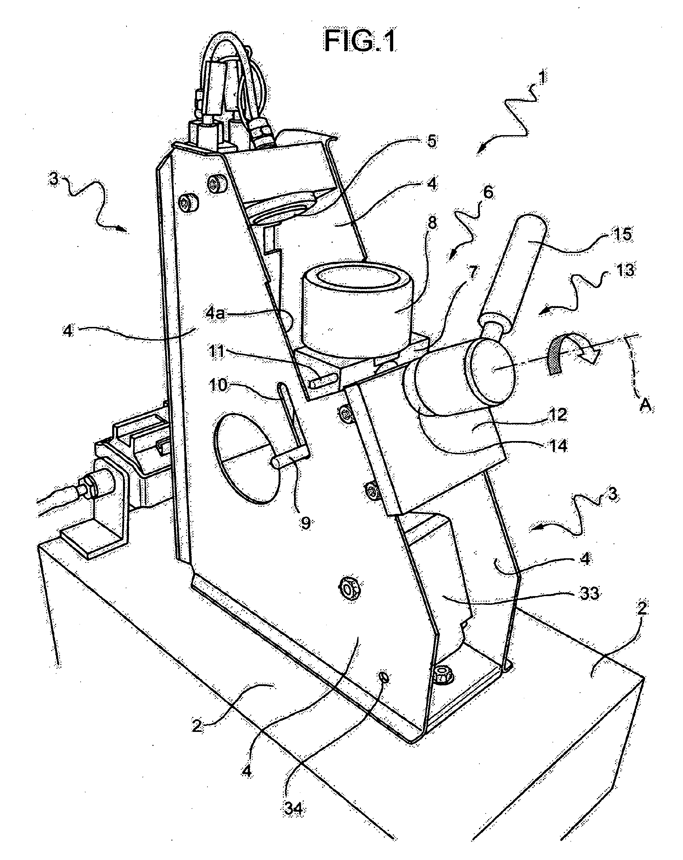

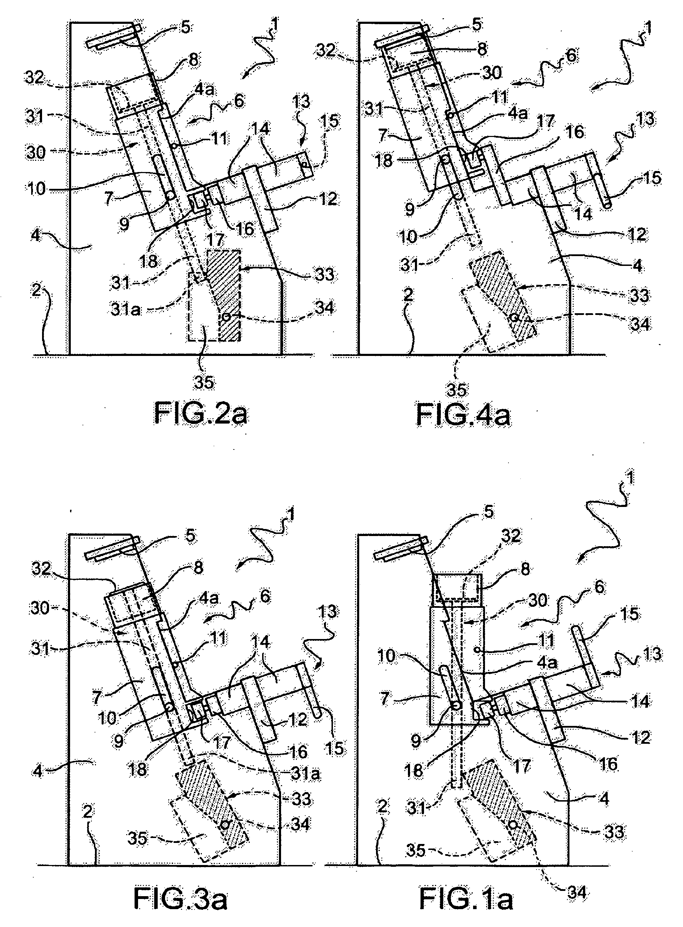

With reference to Figures 1 to 4, in the embodiment shown by way of example, the machine 1 comprises a base 2 on which a support framework, generally indicated 3, is fixed. The framework 3 comprises basically two shaped plates 4 which extend facing one another in respective substantially parallel vertical planes.

In the embodiment shown by way of example, the plates 4 are shaped approximately as right-angled triangles and are fixed to the base 2 in the region of their shorter catheti.

A hot-water dispensing head, generally indicated 5, is mounted in a fixed position between the upper ends of the plates 4. The dispensing head, which is of a conventional type, is mounted in an inclined attitude so that it is substantially perpendicular to the general direction of the oblique sides of the plates 4.

The head 5 is connected to a heater device such as a boiler or heat-exchanger, also in conventional manner.

The machine 1 further comprises a capsule-holder unit 6 mounted movably in the support framework 3. In the embodiment shown, this unit comprises substantially a main body 7 to which is fixed an upper cup-shaped element 8 for holding a capsule or the like containing a product for the preparation of a beverage. The body 7 has, on its sides facing the plates 4, two horizontally-aligned appendages or pins which face in opposite directions and only one of which is visible, indicated 9, in the drawings. These pins extend through respective guide slots 10 which are formed in the plates 4 and which extend along axes substantially perpendicular to the plane in which the dispensing head 5 lies.

The body 7 also has at least one further transversely projecting appendage 11 substantially parallel to the pins 9. As will become clearer from the following description, the projecting appendage 11 is intended to cooperate with a portion 4a of the edge of the substantially oblique side of a plate 4 when the capsule-holder unit 6 translates away from and towards the dispensing head 5 in operation.

A cross-member 12 fixed to the plates 4 of the support framework 3 takes the form of a plate which lies substantially parallel to the plane defined by the slots 10 in the plates 4.

A rotatable operating unit, generally indicated 13, is connected to the cross-member 12.

In the embodiment shown by way of example in Figures 1 to 4 and 1a to 4a, the operating unit 13 is of the manually-operable type and comprises substantially a shaft 14 which extends through the plate 12 and is rotatable about an axis A substantially perpendicular to that plate.

An actuating grip or handle 15 is connected laterally to the end of the shaft 14 that extends out of the framework 3.

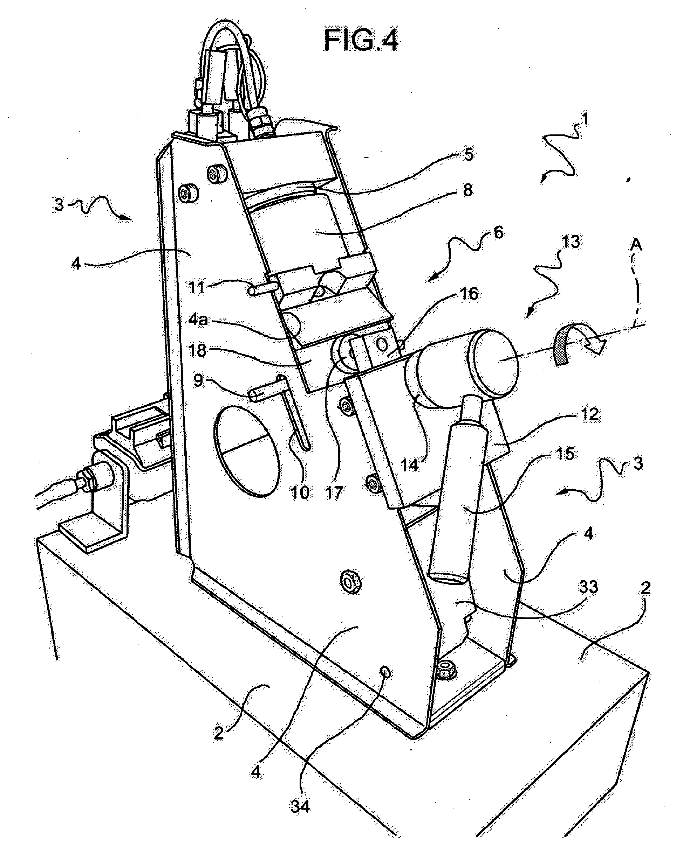

With reference to Figures 1a to 4a, a radial arm 16 is fixed to the end of the shaft 14 that extends in the region between the plates 4 (see Figure 4a in particular); a substantially cylindrical roller 17 is fixed rotatably to the distal end of the shaft 14.

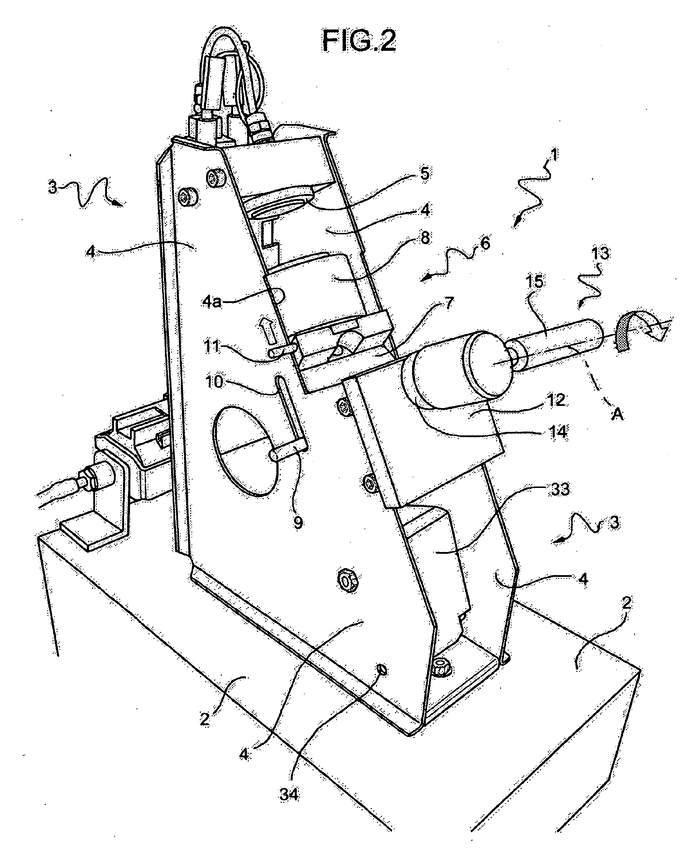

The roller 17 extends in a substantially horizontal channel 18 provided in the lower portion of the body 7 of the capsule-holder unit 6. As can best be seen in Figures 2a to 4a, the transverse width of the channel 18, that is, the distance between its facing side walls, is greater than the diameter of the roller 17, for the reasons which will become clear from the following description. The roller 17 can consequently adopt two different possible attitudes in the channel 18, that is, the attitude shown in Figure 1a in which it is arranged with its axis inclined to the sides or side walls of the channel 18 and in the attitude shown in Figures 2a to 3a in which its axis is substantially parallel to the side walls of the channel 18.

The operating cycle of the machine 1 will now be described with reference to the series of drawings 1 to 4 and 1a to 4a.

Initially, the machine is assumed to be in the condition shown in Figures 1 and 1a. In this condition, the capsule-holder unit 6 is arranged substantially vertically with the pins 9 bearing on the lower ends of the respective slots 10 in the plates 4. In this condition, the roller 17 carried by the arm 16 of the operating unit 13 is inclined in the channel 18 of the capsule-holder unit 6. The cup-shaped body 8 is accessible to a user who can place a capsule of product therein for the preparation of a beverage.

Starting from the loading position of Figures 1 and 1a, as a result of a rotation of the shaft 14 (clockwise as seen in Figure 1), the capsule-holder unit 6 changes its attitude so as to be arranged in the position shown in Figures 2 and 2a. In fact, the rotation of the shaft 14 from the position of Figure 1a brings about a pivoting movement of the capsule-holder unit 6 about the pins 9 until the projecting appendage 11 comes into abutment with the edge 4a of a plate 4 of the support framework (Figures 2 and 2a). In this condition, the capsule-holder unit is aligned with the dispensing head 5 but is still spaced therefrom.

Further rotation of the shaft 14 by means of the handle 15 (still clockwise as seen in Figure 2) brings about a translational movement of the capsule-holder unit towards the dispensing head 5, this translational movement being guided by the engagement of the pins 9 in the associated slots 10 and by the projection 11 bearing against the edge 4a which is parallel to those slots.

The translational movement of the capsule-holder unit 6 stops when, as a result of a further rotation of the shaft 14, the condition shown in Figure 4 is reached in which the cup-shaped element 8 mates with the dispensing head 5 to define the beverage-preparation chamber therewith.

At this point, the beverage is prepared by infusion or percolation of hot water through the capsule of product disposed in the cup-shaped element 8, in known manner.

Upon completion of the beverage preparation, the user returns the machine to the initial condition of Figures 1 and 1a by acting on handle 15 so as to rotate the shaft 14 of the operating device 13 in reverse.

The capsule-holder unit 6 is thus moved from the raised position of Figures 4 and 4a to the lowered position shown in Figures 2 and 2a. Further rotation (anti-clockwise as seen in Figure 2) of the handle 15 brings about pivoting of the capsule-holder unit 6 about the axis defined by the pins 9 which engage the lower ends of the associated slots 10. The capsule-holder unit 6 thus returns to the loading position.

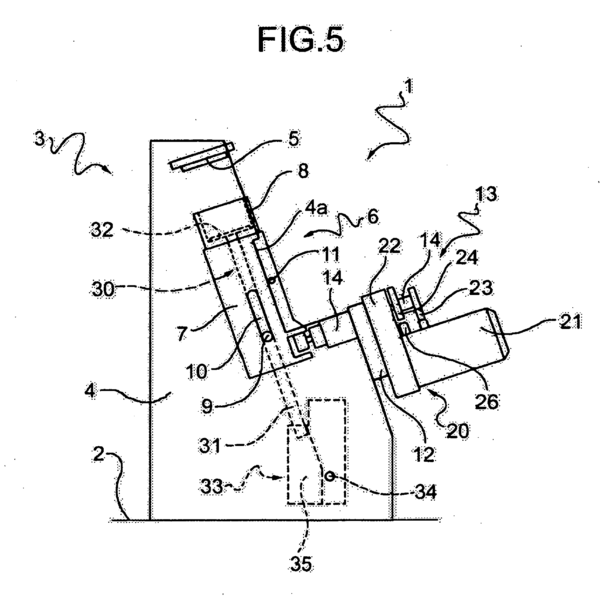

Figure 5 shows a variant in which the capsule-holder unit 6 is moved in the manner described above with reference to Figures 1 to 4 and 1a to 4a but by an actuating device 13 which is not manual but motorized. In the solution of Figure 5, a geared motor unit 20 is fixed to the cross-member 12 and includes a reversible electric motor 21 and an associated set of reduction gears 22 the output of which is connected to the above-described shaft 14. In the embodiment shown, that shaft has an end which extends through and beyond the reduction unit 22 and which carries two cam members 23 and 24 with which respective micro-switches 25 and 26 are associated for interrupting the supply of current to the motor 21 when the capsule-holder unit reaches the travel-limit positions.

The operation of the variant of Figure 5 is similar to that described above with reference to the embodiment shown in the preceding drawings.

The machines described above may advantageously be provided with a simple system for expelling the used capsule from the cup-shaped element 8 of the capsule-holder unit 6. The expulsion system, which is the same both for the manually-operated machine of Figures 1 -4 and 1a-4a and for the motorized machine of Figure 5, will now be described in detail with particular reference to Figures 1a to 4a.

As can be seen in those drawings, the capsule-holder unit 6 comprises an ejector 30 including a rod 31 which is translatable axially in a longitudinal duct provided in the body 7 and through a hole provided in the base wall of the cup-shaped element 8. The end of the rod 31 which extends into the cup-shaped element 8 carries a terminal disk 32.

A body 33 mounted between the plates 4 in the lower portion of the support framework 3 is pivotable about a horizontal axis defined by associated pins 34 (see also Figures 1 to 4).

The body 33 is shaped substantially as an almost parallelepipedal block and is located substantially in a position lower than the lower end of the rod 31 of the ejector 30.

In the embodiment shown, the body 33 has a vertical groove 35 (Figures la-4a) in which the lower end of the rod 31 of the ejector 30 can be inserted at a stage of the operating cycle of the machine 1 (Figure 2a), as will be described further below.

Moreover, the body 33 is shaped and mounted in the framework 3 in a manner such that it tends, due to gravity, to adopt the stable attitude shown in Figures 1a, 3a and 4a, in which its lower edge bears on the base 2. As will be explained below, the body can also adopt the attitude shown in Figure 2a in which it extends substantially vertically, but that attitude is potentially unstable since it tends to return by gravity towards the position shown, for example, in Figure 1a.

The arrangement is such that, when the capsule-holder unit 6 is in the loading position of Figure 1a, the ejector 30 tends, due to gravity, to be arranged with its end disk 32 adjacent the base wall of the cup-shaped element 8. In this condition, the rod 31 is substantially vertical and is disengaged from the body 33 which, owing to gravity, adopts the stable position in which it bears on the base 2.

When, as a result of a rotation of the shaft 14, the capsule-holder unit 6 moves from the position of Figure 1a to that of Figure 2a, the rod 31 of the ejector 30 interferes with the top portion of the body 33, causing it to pivot about the axis 34, and the lower end portion 31a of the rod is inserted in the groove 35 of the body (Figure 2a).

Further rotation of the shaft 14 causes the capsule-holder unit 6 to rise from the lowered position to the raised position until it reaches the position shown in Figures 4 and 4a. In this condition, the rod 31 of the ejector 30 is disengaged from the body 33 which is rearranged in the rest position bearing on the base 2.

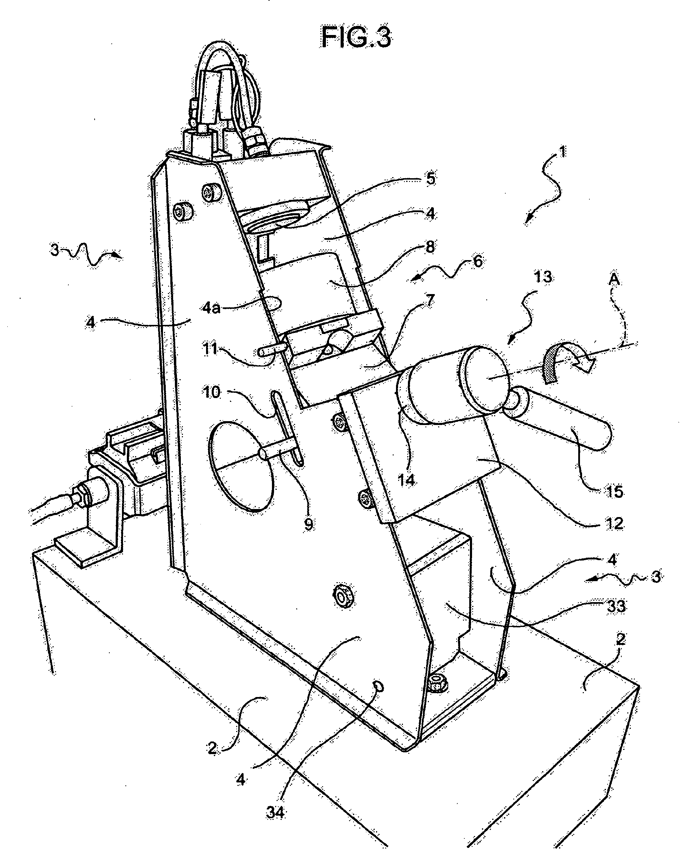

After the preparation of the beverage, reverse rotation of the shaft 14 brings about a downward movement of the capsule-holder unit 6 parallel to the plane defined by the guide slots 10. During this downward movement, at a certain point, the lower end 31a of the rod 31 of the ejector 30 comes into abutment with the top portion of the body 33. The ejector 30 therefore stops whilst the main body 7 and the cup-shaped element 8 continue their translational movement until the lowered position shown in Figure 3a is reached.

The used capsule contained in the cup-shaped element 8 is thus expelled from the cavity thereof as a result of the movement of the end disk 32 of the ejector 30 relative to the cup-shaped element 8.

Further rotation (anti-clockwise as seen in Figure 3) of the shaft 14 then brings about pivoting of the capsule-holder unit 6 which moves from the position of Figure 3a to the position of Figure 1a. During this pivoting of the capsule-holder unit, the lower end of the rod of the ejector 30 is released from the body 33 so that the ejector can descend again by gravity, readopting the attitude it had at the beginning of the cycle.

The ejector system described above is extremely simple and advantageous. However, a machine according to the present invention may be equipped with other expulsion systems of known type. A machine according to the invention may also be produced in which the used capsule is not expelled automatically at the end of the cycle but has to be removed manually by the user.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A machine (1) for preparing beverages by infusion of a product contained in a capsule, comprising:
a support structure (3, 4) bearing a hot-water dispensing head (5),
a capsule-holder body (6) which is mounted movably in the structure (3, 4) and with which guide means (9-11, 4a) are associated for allowing the capsule-holder body to translate in a plane first position in which it mates with the dispensing head (5) defining a beverage-preparation chamber therewith, and a second position in which the guide means (9-11, 4a) allow the capsule-holder body (6) to pivot about a substantially horizontal axis (9) towards a loading angular position in which said body (6) is able to receive a capsule, and
operating means (13) including an actuator member (14) which is rotatable relative to the structure (3, 4) and is connected to the capsule-holder body (6) through an eccentric mechanism (16,17) comprising an arm (16) projecting transversely from the actuator member (14) in a manner such that, starting from a condition in which the capsule-holder body (6) is in the loading position, a rotation of the actuator member (14) in a first direction bring about, in succession, a pivoting of the capsule-holder body (6) towards the second position and then movement thereof to the first position, and a rotation of the actuator member (14) in the opposite direction brings about, in succession, the return of the capsule-holder body (6) to the second position and then pivoting thereof towards the loading position;
the machine (1) being **characterized in that**
the hot-water dispensing head (5) is mounted in an upper portion of the support structure (4) and the capsule-holder body (6) is movable in the operation between a first, raised position and a second, lowered position; and **in that**
said actuator member (14) is rotatable about a first axis (A) which is substantially perpendicular to the plane of translation of the capsule-holder body (6); said arm (16) being provided with a roller (17) which is engaged with clearance in a channel (18) of the capsule-holder body (6) such that when the capsule-holder body (6) is in the said second, lowered position, a rotation of the actuator member (14) in said first direction causes a corresponding rotation of the roller (17) of the eccentric mechanism (16, 17) about said axis (A) and a corresponding pivoting of the capsule-holder body (6) about a second axis perpendicular to said first axis (A).

2. A machine according to Claim 1 in which the guide means comprise at least one pin (9) coupled slidingly with an elongate guide (10) in a manner such that, when the pin (9) engages an end of the guide (10), the capsule-holder body (6) can pivot about the axis of the pin (9).

3. A machine according to Claim 2 in which the at least one pin (9) is integral with the capsule-holder body (6) and the associated guide (10) is integral with the support structure (3, 4).

4. A machine according to Claim 3 in which the guide means further comprise at least one portion (11) of the capsule-holder body (6) which is slidable along an associated guide profile (4a) of the support structure (3, 4).

5. A machine according to any one of the preceding claims in which the capsule-holder body (6) is movable between the raised position and the lowered position along a path which is inclined to the vertical direction.

6. A machine according to any one of the preceding claims in which an ejector device (30-35) is associated with the capsule-holder body (6) and is able to automatically expel the capsule used for the preparation of a beverage from that body (6), the ejector device comprising an ejector member (31, 32) which is movable axially relative to the capsule-holder body (6) and which cooperates with an associated reaction member (33) which is pivotable in the support structure (3, 4) between a stable position in which it is able to bring about the activation of the ejector member (31, 32) whilst the capsule-holder body (6) moves from the raised position to the lowered position, and an unstable position in which it permits de-activation of the ejector member (31, 32) and movement of the capsule-holder body (6) from the lowered position to the raised position.

7. A machine according to Claim 6 in which the reaction body (33) is able to be disengaged from the ejector member (31, 32) and to return automatically to the stable position when the capsule-holder body (6) moves from the lowered position to the raised position.

8. A machine according to any one of the preceding claims in which the operating means comprise a rotary motor (21) connected to the rotatable actuator member (14).

## Patentansprüche

1. Maschine (1) zum Zubereiten von Getränken durch Aufgießen eines in einer Kapsel enthaltenen Produkts, umfassend:
eine Haltestruktur (3, 4), die einen Heißwasser-Spendekopf (5) trägt,
ein Kapselhaltergehäuse (6), das beweglich in der Struktur (3, 4) montiert ist und dem Führungsmittel (9-11, 4a) zugeordnet sind, um dem Kapselhaltergehäuse eine Verschiebung auf einer Ebene zwischen einer ersten Position, in der es mit dem Spendekopf (5) zusammenpasst und dabei mit diesem eine Getränkezubereitungskammer definiert, und einer zweiten Position, in der die Führungsmittel (9-11, 4a) dem Kapselhaltergehäuse (6) ermöglichen, um eine im Wesentlichen horizontale Achse (9) in eine Lade-Winkelposition zu schwenken, in der das Gehäuse (6) eine Kapsel aufnehmen kann, zu ermöglichen, und
Bedienungsmittel (13), einschließlich eines Betätigungselements (14), das relativ zur Struktur (3, 4) drehbar ist und durch einen exzentrischen Mechanismus (16, 17), der einen schräg aus dem Betätigungselement (14) ragenden Arm (16) umfasst, mit dem Kapselhaltergehäuse (6) solcherart verbunden ist, dass, ausgehend von einem Zustand, in dem das Kapselhaltergehäuse (6) sich in der Ladeposition befindet, eine Drehung des Betätigungselements (14) in eine erste Richtung nacheinander ein Schwenken des Kapselhaltergehäuses (6) hin zur zweiten Position und dann dessen Bewegung in die erste Position bewirkt, und eine Drehung des Betätigungselements (14) in die entgegengesetzte Richtung nacheinander das Zurückkehren des Kapselhaltergehäuses (6) in die zweite Position und dann dessen Schwenken hin zur Ladeposition bewirkt;
wobei die Maschine (1) **dadurch gekennzeichnet ist, dass**
der Heißwasser-Spendekopf (5) an einem oberen Teil der Haltestruktur (4) montiert ist und das Kapselhaltergehäuse (6) im Betrieb zwischen einer ersten angehobenen Position und einer zweiten abgesenkten Position beweglich ist; und dass
das Betätigungselement (14) um eine erste Achse (A) drehbar ist, die zur Verschiebungsebene des Kapselhaltergehäuses (6) im Wesentlichen lotrecht ist; wobei der Arm (16) mit einer Walze (17) versehen ist, die mit Spielraum in eine Rille (18) des Kapselhaltergehäuses (6) eingreift, so dass, wenn sich das Kapselhaltergehäuse (6) in der zweiten abgesenkten Position befindet, eine Drehung des Betätigungselements (14) in die erste Richtung eine entsprechende Drehung der Walze (17) des exzentrischen Mechanismus (16, 17) um die Achse (A) und ein entsprechendes Schwenken des Kapselhaltergehäuses (6) um eine zur ersten Achse (A) lotrechte, zweite Achse bewirkt.

2. Maschine gemäß Anspruch 1, wobei die Führungsmittel mindestens einen Stift (9) umfassen, der mit einer länglichen Führung (10) solcherart verschiebbar gekoppelt ist, dass das Kapselhaltergehäuse (6), wenn der Stift (9) in ein Ende der Führung (10) eingreift, um die Achse des Stifts (9) schwenken kann.

3. Maschine gemäß Anspruch 2, wobei der mindestens eine Stift (9) im Kapselhaltergehäuse (6) integriert ist und die dazugehörige Führung (10) in der Haltestruktur (3, 4) integriert ist.

4. Maschine gemäß Anspruch 3, wobei die Führungsmittel weiters mindestens einen Abschnitt (11) des Kapselhaltergehäuses (6) umfassen, der entlang eines dazugehörigen Führungsprofils (4a) der Haltestruktur (3, 4) verschiebbar ist.

5. Maschine gemäß einem der vorhergehenden Ansprüche, wobei das Kapselhaltergehäuse (6) zwischen der angehobenen Position und der abgesenkten Position entlang einer in vertikaler Richtung geneigten Bahn bewegbar ist.

6. Maschine gemäß einem der vorhergehenden Ansprüche, wobei eine Ausstoßvorrichtung (30-35) mit dem Kapselhaltergehäuse (6) verbunden ist und imstande ist, die zur Zubereitung eines Getränks verwendete Kapsel automatisch aus dem Gehäuse (6) auszustoßen, wobei die Ausstoßvorrichtung ein Ausstoßelement (31, 32) umfasst, das relativ zum Kapselhaltergehäuse (6) axial beweglich ist und mit einem dazugehörigen Reaktionselement (33) zusammenwirkt, welches in der Haltestruktur (3, 4) zwischen einer stabilen Position, in der es die Aktivierung des Ausstoßelements (31, 32) bewirken kann, während sich das Kapselhaltergehäuse (6) aus der angehobenen Position in die abgesenkte Position bewegt, und einer instabilen Position, in der es eine Deaktivierung des Ausstoßelements (31, 32) und eine Bewegung des Kapselhaltergehäuses (6) aus der abgesenkten Position in die angehobene Position ermöglicht, schwenkbar ist.

7. Maschine gemäß Anspruch 6, wobei der Reaktionskörper (33) vom Ausstoßelement (31, 32) gelöst werden und automatisch in die stabile Position zurückkehren kann, wenn sich das Kapselhaltergehäuse (6) aus der abgesenkten Position in die angehobene Position bewegt.

8. Maschine gemäß einem der vorhergehenden Ansprüche, wobei die Bedienungsmittel einen mit dem drehbaren Betätigungselement (14) verbundenen Drehmotor (21) umfassen.

## Revendications

1. Machine (1) pour préparer des boissons par infusion d'un produit contenu dans une capsule, comprenant :
une structure de support (3, 4) supportant une tête de distribution d'eau chaude (5),
un corps de support de capsule (6) qui est monté de manière mobile dans la structure (3, 4) et avec lequel des moyens de guidage (9-11, 4a) sont associés pour permettre au corps de support de capsule de se translater dans un plan entre une première position dans laquelle il s'accouple avec la tête de distribution (5) en définissant une chambre de préparation de boisson avec celle-ci, et une seconde position dans laquelle les moyens de guidage (9-11, 4a) permettent au corps de support de capsule (6) de pivoter autour d'un axe sensiblement horizontal (9) vers une position angulaire de chargement dans laquelle ledit corps (6) peut recevoir une capsule, et
des moyens d'utilisation (13) incluant un élément d'actionnement (14) qui peut tourner par rapport à la structure (3, 4) et est relié au corps de support de capsule (6) par l'intermédiaire d'un mécanisme d'excentrique (16, 17) comprenant un bras (16) faisant saillie transversalement depuis l'élément d'actionnement (14) de telle manière que, en partant d'un état dans lequel le corps de support de capsule (6) est dans la position de chargement, une rotation de l'élément d'actionnement (14) dans une première direction amène, se succédant, un pivotement du corps de support de capsule (6) vers la seconde position et ensuite un déplacement de celui-ci vers la première position, et une rotation de l'élément d'actionnement (14) dans la direction opposée amène, se succédant, le retour du corps de support de capsule (6) dans la seconde position puis le pivotement de celui-ci vers la position de chargement ;
la machine (1) étant **caractérisée en ce que**
la tête de distribution d'eau chaude (5) est montée dans une partie supérieure de la structure de support (4) et le corps de support de capsule (6) est mobile en fonctionnement entre une première partie soulevée et une seconde partie abaissée ; et **en ce que**
ledit élément d'actionnement (14) peut tourner autour d'un premier axe (A) qui est sensiblement perpendiculaire au plan de translation du corps de support de capsule (6) ; ledit bras (16) étant pourvu d'un rouleau (17) qui est en prise avec jeu dans un canal (18) du corps de support de capsule (6) de telle manière que quand le corps de support de capsule (6) est dans ladite seconde position abaissée, une rotation de l'élément d'actionnement (14) dans ladite première direction provoque une rotation correspondante du rouleau (17) du mécanisme d'excentrique (16, 17) autour dudit axe (A) et un pivotement correspondant du corps de support de capsule (6) autour d'un second axe perpendiculaire au dit premier axe (A).

2. Machine selon la revendication 1, dans laquelle les moyens de guidage comprennent au moins une tige (9) couplée de façon à coulisser avec un guide (10) allongé de telle manière que, quand la tige (9) vient en prise avec une extrémité du guide (10), le corps de support de capsule (6) peut pivoter autour de l'axe de la tige (9).

3. Machine selon la revendication 2, dans laquelle l'au moins une tige (9) est d'un seul bloc avec le corps de support de capsule (6) et le guide (10) associé est d'un seul bloc avec la structure de support (3, 4).

4. Machine selon la revendication 3, dans laquelle les moyens de guidage comprennent en outre au moins une partie (11) du corps de support de capsule (6) qui peut coulisser le long d'un profil de guidage associé (4a) de la structure de support (3, 4).

5. Machine selon l'une quelconque des revendications précédentes, dans laquelle le corps de support de capsule (6) est mobile entre la position soulevée et la position abaissée le long d'un chemin qui est incliné par rapport à la direction verticale.

6. Machine selon l'une quelconque des revendications précédentes, dans laquelle un dispositif d'éjecteur (30-35) est associé avec le corps de support de capsule (6) et peut expulser automatiquement la capsule utilisée pour la préparation d'une boisson de ce corps (6), le dispositif d'éjecteur comprenant un élément d'éjecteur (31, 32) qui est mobile axialement par rapport au corps de support de capsule (6) et qui coopère avec un élément de réaction associé (33) qui peut pivoter dans la structure de support (3, 4) entre une position stable dans laquelle il peut provoquer l'activation de l'élément d'éjecteur (31, 32) alors que le corps de support de capsule (6) se déplace depuis la position soulevée vers la position abaissée, et une position instable dans laquelle il permet la désactivation de l'élément d'éjecteur (31, 32) et le déplacement du corps de support de capsula (6) de la position abaissée vers la position soulevée.

7. Machine selon la revendication 6, dans laquelle le corps de réaction (33) peut venir hors de prise de l'élément d'éjecteur (31, 32) et retourner automatiquement dans la position stable quand le corps de support de capsule (6) se déplace de la position abaissée vers la position soulevée.

8. Machine selon l'une quelconque des revendications précédentes, dans laquelle les moyens d'utilisation comprennent un moteur rotatif (21) relié à l'élément d'actionnement tournant (14).
